# EUROPEAN PATENT APPLICATION

(11) **EP 1 715 203 A1**
(43) Date of publication of application: **25.10.2006**
(21) Application number: 05704202.0
(22) Date of filing: 27.01.2005
(51) Int. Cl.: F16C 33/58, F16C 19/16, F02B 39/00

(54) **OBLIQUE CONTACT BALL BEARING AND TURBOCHARGER**

(30) Priority: 28.01.2004 JP 2004020020
(71) Applicant: JTEKT CORPORATION, Chuo-ku Osaka-shi Osaka 542-8502 (JP)
(72) Inventor: ITO, Ikuo c/o JTEKT Corporation, Osaka 5428502 (JP)
(74) Representative: HOFFMANN EITLE
(86) International application number: PCT/JP2005/001099
(87) International publication number: WO 2005/073575

(57) **Abstract**

An oblique contact ball bearing 2 has a curvature radius of a raceway 21 of an outer ring 10 which is reduced toward a bottom 21A of the raceway 21 in a cross-section of the outer ring 10 cut in a plane containing a central axis of the outer ring 10. According to the oblique contact ball bearing 2, a distance Δx1 between the bottom 21A of the raceway 21 of the outer ring 10 and balls 12 can be made greater without increasing a contact angle θ of the ball 12 than the case where the curvature radius of the raceway 21 of the outer ring 10 is constant. Even if a temperature difference occurs between an inner ring and the outer ring, a clearance clogging can be avoided, and the balls are smoothly rotated to prevent early peeling.

## Description

### TECHNICAL FIELD

The present invention relates to an oblique contact ball bearing (angular contact ball bearing), and more specifically relates to an oblique contact ball bearing suitable for use with large temperature difference between an inner ring and an outer ring and useful, for example, as an oblique contact ball bearing for a turbocharger.

### BACKGROUND ART

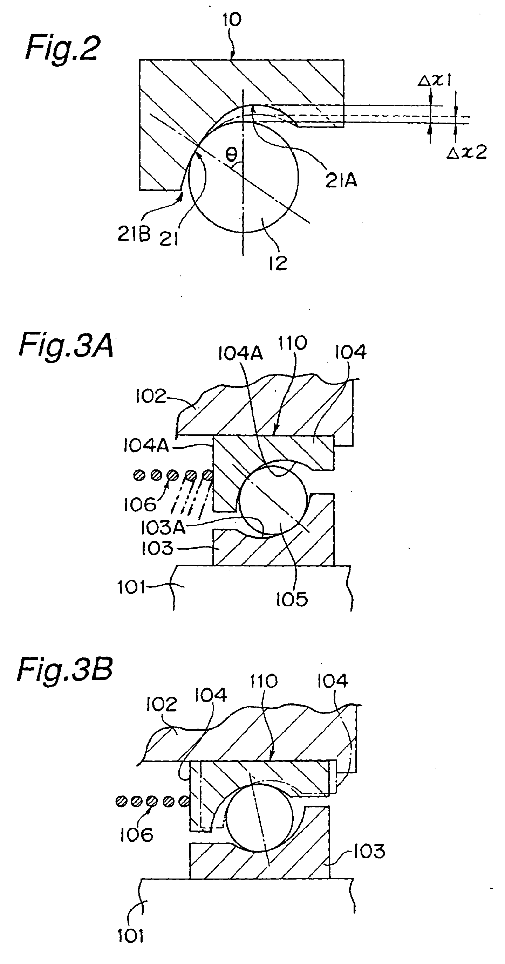

As an example of conventional oblique contact ball bearings, there is an oblique contact ball bearing 110 placed between a turbine shaft 101 of a turbocharger and a housing 102 as shown in Fig. 3A. The oblique contact ball bearing 110 is composed of an inner ring 103 engaged with an outer peripheral face of the turbine shaft 101, an outer ring 104 engaged with an inner peripheral face of the housing 102, and a ball 105 rotatably interposed between a raceway 103A of the inner ring 103 and a raceway 104A of the outer ring 104. It is to be noted that a thick end face 104A of the outer ring 104 is pressed by a spring 106 in the axial direction so that a preload is applied to the bearing 110.

Since the turbocharger is structured such that turbine blades are rotated by high-temperature exhaust gas, the temperature of the turbine shaft 101 becomes high. Thereby, the temperature of the inner ring 103 of the oblique contact ball bearing 110 is increased, while the housing 102 is cooled by a coolant.

Consequently, in the case where, for example, the housing 102 is supercooled, a temperature difference becomes large between the inner ring 103 and the outer ring 104 of the oblique contact ball bearing 110. Thus, due to a thermal expansion difference between the inner ring 103 and the outer ring 104, the outer ring 104 shifts from a state described by a chain line to another state described by a solid line. This movement of the outer ring 104 decreases a contact angle of the ball 105, so that the ball 105 is much compressed by the raceway 104A of the outer ring 104 and the raceway 103A of the inner ring 103. Thereby, smooth rotational movement of the ball 105 is disturbed. More particularly, there is a problem that the balls 105 clog in a clearance between the inner ring 103 and the outer ring 104, so that peeling occurs at an early stage on a bottom of the raceway 104A of the outer ring 104 and/or on a bottom of the raceway 103A of the inner ring 103.

### DISCLOSURE OF INVENTION

### SUBJECTS TO BE SOLVED BY THE INVENTION

An object of the present invention is to provide an oblique contact ball bearing capable of avoiding a clearance clogging and preventing generation of early peeling by smooth ball rotation even if a temperature difference occurs between an inner ring and an outer ring.

### MEANS FOR SOLVING THE SUBJECTS

In order to achieve the above-mentioned object, a first aspect of the present invention provides an oblique contact ball bearing, comprising:
an outer ring;
an inner ring; and
a ball placed between the outer ring and the inner ring, wherein
a straight line connecting between a point in contact with a raceway of the outer ring and a point in contact with a raceway of the inner ring is inclined to a plane orthogonal to an axis of the outer ring, and wherein
a curvature radius of the raceway is reduced toward a bottom of the raceway in an axial cross-section of the outer ring.

According to the oblique contact ball bearing of the present invention, the curvature radius of the raceway of the outer ring is reduced toward the bottom of the raceway of the outer ring. Therefore, a distance between the bottom of the raceway of the outer ring and the ball can be made greater without increasing a contact angle of the ball than the case where the curvature radius of the raceway of the outer ring is constant.

According to the present invention, therefore, it is possible to avoid a clearance clogging and to prevent generation of early peeling by smooth ball rotation even if a temperature difference occurs between an inner ring and an outer ring.

It should be noted that when the contact angle of the ball is increased, a spin of the ball is made greater to cause burning even though the distance is extended.

A second aspect of the present invention provides a turbocharger comprising:
a housing;
a turbine shaft having a turbine-side impeller and a compressor-side impeller respectively on both sides of the turbine shaft; and
an oblique contact ball bearing for supporting the turbine shaft on the housing, wherein the oblique contact ball bearing comprises:
   an outer ring;
   an inner ring; and
   a ball placed between the outer ring and the inner ring, wherein
   a straight line connecting between a point in contact with a raceway of the outer ring and a point in contact with a raceway of the inner ring is inclined to a plane orthogonal to an axis of the outer ring, and wherein
   a curvature radius of the raceway is reduced toward a bottom of the raceway in an axial cross-section of the outer ring.

In the oblique contact ball bearing according to one embodiment of the present invention, the raceway is a part of an ellipse, whose major axis direction is a radial direction of the outer ring, in the axial cross-section of the outer ring.

In the turbocharger according to one embodiment of the present invention, the raceway is a part of an ellipse, whose major axis direction is a radial direction of the outer ring, in the axial cross-section of the outer ring.

### EFFECTS OF INVENTION

According to the oblique contact ball bearing of the preset invention, it becomes possible to extend a distance between the bottom of the raceway of the outer ring and the ball without increasing the contact angle. Even if a temperature difference occurs between the inner ring and the outer ring, a clearance clogging can be avoided and generation of early peeling can be prevented by smooth rotation of the ball.

### BRIEF DESCRIPTION OF THE DRAWINGS

FIG. 1 is a cross-sectional view showing a substantial part of a turbocharger having an oblique contact ball bearing according to an embodiment of the present invention;
FIG. 2 is a cross-sectional view showing the shape of an outer ring raceway of the oblique contact ball bearing according to the embodiment;
FIG. 3A is a cross-sectional view showing a conventional oblique contact ball bearing; and
Fig. 3B is a cross-sectional view showing a state in which a thermal expansion difference between an inner ring and an outer ring occurs in the conventional oblique contact ball bearing.

### BEST MODE FOR CARRING OUT THE INVENTION

Embodiments of the invention will now be described in detail with reference to the accompanying drawings.

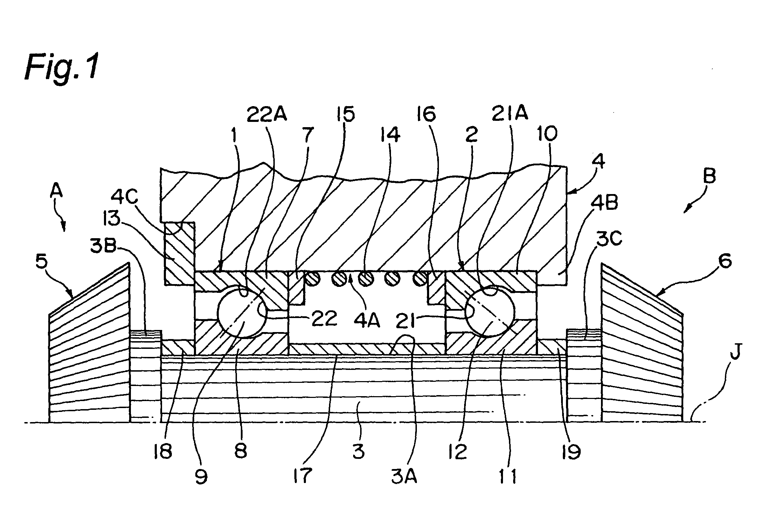

FIG. 1 shows a substantial part of a turbocharger having turbocharger oblique contact ball bearings 1, 2 according to an embodiment of the present invention. The turbocharger includes a turbine shaft 3 and a housing 4 surrounding the outer periphery of the turbine shaft 3. The oblique contact ball bearings 1 and 2 are placed between the housing 4 and the turbine shaft 3 at a specified interval in the axial direction. The turbine shaft 3 is equipped with impellers 5 and 6 at both ends of the shaft on a compressor side A and a turbine side B, respectively.

The oblique contact ball bearing 1 is composed of an outer ring 7, an inner ring 8 and a plurality of balls 9 placed between the outer ring 7 and the inner ring 8. The ball 9 is placed such that a straight line connecting between a contact point on a raceway 22 of the outer ring 7 and a contact point on a raceway of the inner ring 8 is inclined to a plane orthogonal to an axis of the outer ring 7. Also, the oblique contact ball bearing 2 is composed of an outer ring 10, an inner ring 11 and a plurality of balls 12 placed between the outer ring 10 an the inner ring 11. The ball 12 is placed such that a straight line connecting between a contact point on a raceway 21 of the outer ring 10 and a contact point on a raceway of the inner ring 11 is inclined to a plane orthogonal to an axis of the outer ring 10. The outer rings 7, 10, the inner rings 8, 11 and the balls 9, 12 of the oblique contact ball bearings 1, 2 may be made of a high-carbon chromium bearing steel [Japanese Industrial Standard i.e. JIS SUJ2], a martensitic stainless steel [JIS SUS440C, SUS420C, etc.] or a heat-resisting corrosion-resisting alloy [AISI M-50, JIS high speed tool steel SKH4, etc.]. The inner rings 8, 11 may be made of ceramic.

The inner ring 8 of the oblique contact ball bearing 1 and the inner ring 11 of the oblique contact ball bearing 2 are engaged with and fixed on an outer peripheral face 3A of the turbine shaft 3. The outer ring 7 of the oblique contact ball bearing 1 and the outer ring 10 of the outer ring 10 of the oblique contact ball bearing 2 are engaged with an inner peripheral face 4A of the housing 4. The outer ring 10 of the oblique contact ball bearing 2 contacts with an inside protruding section 4B formed in one axial end of the housing 4. As a consequence, its axial movement toward the turbine B side is regulated. The outer ring 7 of the oblique contact ball bearing 1 contacts with a snap ring 13 engaged with an annular recess section 4C formed on the other axial end of the housing 4. As a consequence, its axial movement toward the compressor A side is regulated. A coil spring 14, which is placed between the outer ring 7 and the outer ring 10, biases the outer ring 7 and the outer ring 10 through rings 15, 16 outwardly in the axial direction. That is, the coil spring 14 biases the outer rings 7, 10 toward the snap ring 13 and the inside protruding section 4B.

An annular spacer 17 is placed between the inner ring 8 and the inner ring 11. An annular spacer 18 is placed between the inner ring 8 and a large diameter step section 3B of the turbine shaft 3. An annular spacer 19 is placed between the inner ring 11 and a large diameter step section 3C of the turbine shaft 3. These annular spacers 17, 18, 19 regulate axial positions of the inner ring 8 and the inner ring 11 with respect to the turbine shaft 3.

The turbocharger is rotated as the turbine B-side impeller 6 receives exhaust gas from an engine. As a consequence, the turbine shaft 3 is rotated, the compressor A-side impeller 5 is rotated and the engine is supercharged. During operation of the turbocharger, the turbine shaft 3 gains, for example, 100,000 rpm. Heat transmitted from the turbine B side to the turbine shaft 3 is transmitted to the inner rings 8, 11 so that the temperature of the inner rings 8, 11 increases. The housing 4 is cooled by a coolant so that the temperature rise in the outer rings 7, 10 is suppressed. Therefore, during operation of the turbocharger, heat expansion of the outer rings 7, 10 becomes smaller than the heat expansion of the inner rings 8, 11.

Next, Fig. 2 shows a cross-sectional view of the outer ring 10 where the outer ring 10 is cut in a plane containing a central axis J of the outer ring 10 of the oblique contact ball bearing 2. A raceway 21 of the outer ring 10 in the cross-section of the outer ring 10 forms a part of an ellipse. More particularly, the raceway 21 in the axial cross-section of the outer ring 10 constitutes a part of an ellipse with a radial direction of the outer ring 10 as a major axis direction thereof. The major axis of the ellipse is a segment perpendicular to the axis traveling through a bottom 21A of the raceway 21. Therefore, the curvature radius of the raceway 21 of the outer ring 10 is reduced toward the bottom 21A of the raceway 21 from one axial end 21B of the raceway 21.

According to the oblique contact ball bearing 2, therefore, without increasing a contact angle θ of the ball 12, a distance Δx1 between the bottom 21A of the raceway 21 of the outer ring 10 and the ball 12 can be made greater by (Δx1-Δx2) than the case where the curvature radius of the raceway 21 of the outer ring 10 is constant, as shown by a chain line in Fig. 2. Herein, the value Δx2 represents a distance between the bottom 21A of the raceway 21 of the outer ring 10 and the ball 12 in the case where the curvature radius of the raceway 21 of the outer ring 10 is constant as shown by a chain line in Fig. 2. It should be noted that increase in contact angle θ of the ball 12 makes it possible to extend the distance Δx1 but also enlarge a spin of the ball 12 which causes burning.

Thus, according to the oblique contact ball bearing 2 in the preset embodiment, it becomes possible to extend the distance Δx1 between the bottom 21A of the raceway 21 of the outer ring 10 and the ball 12 by (Δx1-Δx2) without increasing the contact angle θ. Thereby, a clearance clogging can be avoided, and the balls 12 are smoothly rotated so that generation of early peeling can be prevented even if temperature difference occurs between the inner ring 11 and the outer ring 10.

In another oblique contact ball bearing 1, the raceway 22 of the outer ring 7 is made to form a part of an ellipse, which is identical to the raceway 21 of the outer ring 10 in the oblique contact ball bearing 2, in a cross-section of the outer ring 7 cut in a plane containing a central axis of the outer ring 7. Therefore, the curvature radius of the raceway 22 of the outer ring 7 is reduced toward a bottom 22A of the raceway 22. Therefore, as in the case of the oblique contact ball bearing 2, the oblique contact ball bearing 1 makes it possible to increase a distance between the bottom 22A of the raceway 22 of the outer ring 7 and the ball 9 without increasing a contact angle θ, as compared with the case where the curvature radius of the raceway 22 is constant. Even if temperature difference occurs between the inner ring 8 and the outer ring 7, a clearance clogging can be avoided, and the balls 9 are smoothly rotated so that generation of early peeling can be prevented.

In the oblique contact ball bearings 1, 2 according to the above-stated embodiments, the raceways 21, 22 of the outer rings 7, 10 are cross-sectionally shaped into part of an ellipse. However, the shape of the raceways 21, 22 is not necessarily limited to part of an ellipse. Specifically, the raceways 21, 22 of the outer rings 7, 10 may have any shape as long as the curvature radius of the raceways 21, 22 is reduced toward the bottoms 21A, 22A of the raceways 21, 22 in a cross-section of the outer rings 7, 10 cut in a plane containing the central axis of the outer rings 7, 10.

## Claims

1. An oblique contact ball bearing, comprising:
an outer ring (7, 10);
an inner ring (8, 11); and
a ball placed between the outer ring (7, 10) and the inner ring (8, 11), wherein
a straight line connecting between a point in contact with a raceway (22, 21) of the outer ring (7, 10) and a point in contact with a raceway of the inner ring (8, 11) is inclined to a plane orthogonal to an axis of the outer ring, and wherein
a curvature radius of the raceway (22, 21) is reduced toward a bottom of the raceway (22, 21) in an axial cross-section of the outer ring (7, 10).

2. A turbocharger comprising:
a housing (4);
a turbine shaft (3) having a turbine-side impeller (6) and a compressor-side impeller (5) respectively on both sides of the turbine shaft (3); and
an oblique contact ball bearing (1, 2) for supporting the turbine shaft on the housing, wherein the oblique contact ball bearing (1, 2) comprises:
an outer ring (7, 10);
an inner ring (8, 11); and
a ball placed between the outer ring (7, 10) and the inner ring (8, 11), wherein
a straight line connecting between a point in contact with a raceway (22, 21) of the outer ring (7, 10) and a point in contact with a raceway of the inner ring (8, 11) is inclined to a plane orthogonal to an axis of the outer ring, and wherein
a curvature radius of the raceway (22, 21) is reduced toward a bottom of the raceway (22, 21) in an axial cross-section of the outer ring (7, 10).

3. The oblique contact ball bearing as set forth in Claim 1, wherein
the raceway (22, 21) is a part of an ellipse, whose major axis direction is a radial direction of the outer ring (7, 10), in the axial cross-section of the outer ring (7, 10).

4. The turbocharger as set forth in Claim 2, wherein
the raceway (22, 21) is a part of an ellipse, whose major axis direction is a radial direction of the outer ring (7, 10), in the axial cross-section of the outer ring (7, 10).
